# EUROPEAN PATENT SPECIFICATION

(11) **EP 3 314 441 B1**
(45) Date of publication and mention of the grant of the patent: **20.10.2021**
(21) Application number: 16815002.7
(22) Date of filing: 31.05.2016
(51) Int. Cl.: G06F 12/02, G06F 3/06, H03M 7/30, H03M 13/09

(54) **EFFICIENT SOLID STATE DRIVE DATA COMPRESSION SCHEME AND LAYOUT**
EFFIZIENTES SSD-DATENKOMPRESSIONSSCHEMA UND LAYOUT
SYSTÈME ET DISPOSITION POUR LA COMPRESSION EFFICACE DE DONNÉES D'UN DISQUE DUR STATIQUE À SEMI-CONDUCTEURS

(30) Priority: 26.06.2015 US 201514751450
(43) Date of publication of application: 02.05.2018
(73) Proprietor: Intel Corporation, Santa Clara, CA 95054 (US)
(72) Inventor: KHAN, Jawad B., Cornelius, Oregon 97113 (US); MANGOLD, Richard P., Forest Grove, Oregon 97116 (US); GOPAL, Vinodh, Westborough, Massachusetts 01581 (US); GARCIA, Rowel S., Hillsboro, Oregon 97124 (US); GRIMSRUD, Knut S., Forest Grove, Oregon 97116 (US)
(74) Representative: Rummler, Felix
(86) International application number: PCT/US2016/035079
(87) International publication number: WO 2016/209564

(56) References cited:
- WO-A1-2009/025923
- WO-A1-2009/094469
- WO-A2-2007/138599
- US-A1- 2012 290 798
- US-A1- 2013 010 949
- US-A1- 2013 219 104
- US-A1- 2014 208 003
- US-A1- 2014 281 146

## Description

### FIELD

The present disclosure generally relates to the field of electronics. More particularly, some embodiments generally relate to efficient Solid State Drive (SSD) data compression scheme and layout.

### BACKGROUND

Generally, memory used to store data in a computing system can be volatile (to store volatile information) or non-volatile (to store persistent information). Volatile data structures stored in volatile memory are generally used for temporary or intermediate information that is required to support the functionality of a program during the run-time of the program. On the other hand, persistent data structures stored in non-volatile (or persistent memory) are available beyond the run-time of a program and can be reused. Moreover, new data is typically generated as volatile data first, before a user or programmer decides to make the data persistent. For example, programmers or users may cause mapping (i.e., instantiating) of volatile structures in volatile main memory that is directly accessible by a processor. Persistent data structures, on the other hand, are instantiated on non-volatile storage devices like rotating disks attached to Input/Output (I/O or 10) buses or non-volatile memory based devices like a solid state drive.

As computing capabilities are enhanced in processors, one concern is the speed at which memory may be accessed by a processor. For example, to process data, a processor may need to first fetch data from a memory. After completion of the data processing, the results may need to be stored in the memory. Therefore, the memory access speed can have a direct effect on overall system performance.

Another important consideration is power consumption. For example, in mobile computing devices that rely on battery power, it is very important to reduce power consumption to allow for the device to operate while mobile. Power consumption is also important for non-mobile computing devices as excess power consumption may increase costs (e.g., due to additional power usage, increased cooling requirements, etc.), shorten component life, limit locations at which a device may be used, etc.

Hard disk drives provide a relatively low-cost storage solution and are used in many computing devices to provide non-volatile storage. Disk drives, however, use a lot of power when compared with solid state drives since a hard disk drive needs to spin its disks at a relatively high speed and move disk heads relative to the spinning disks to read/write data. This physical movement generates heat and increases power consumption. Also, solid state drives are much faster at performing read and write operations when compared with hard drives. To this end, many computing segments are migrating towards solid state drives. Document WO 2009/025923 A1 discloses the compression and decompression of data of a memory in parallel.

### SUMMARY OF INVENTION

The present invention is defined in the independent claims.

### BRIEF DESCRIPTION OF THE DRAWINGS

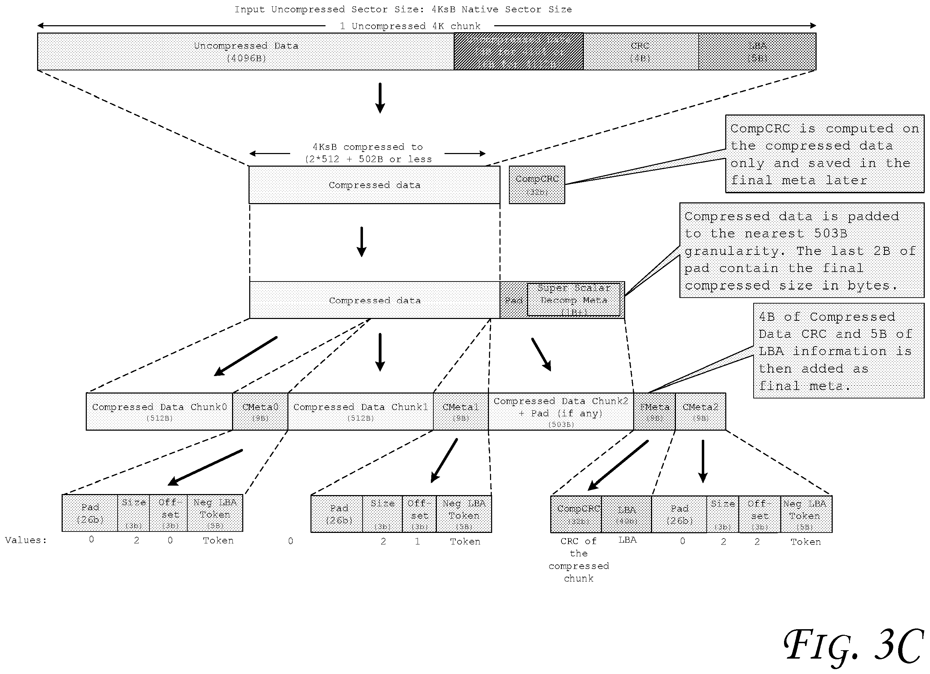

The detailed description is provided with reference to the accompanying figures. In the figures, the left-most digit(s) of a reference number identifies the figure in which the reference 15 number first appears. The use of the same reference numbers in different figures indicates similar or identical items. The embodiments corresponding to the figures are for illustrative purpose only. Fig 3C relates to aspects corresponding to the appended claims.
Figs. 1 and 4-6 illustrate block diagrams of embodiments of computing systems, which may be utilized to implement various embodiments discussed herein.
Fig. 2 illustrates a block diagram of various components of a solid state drive, according to 20 an embodiment.
Figs. 3A, 3B, 3C, 3D, and 3E illustrate block diagrams of data layouts, according to some embodiments.
Figs. 3F, 3G, and 3H illustrate block diagrams of various solid state drive components for compression/decompression, according to some embodiments.

### DETAILED DESCRIPTION

In the following description, numerous specific details are set forth in order to provide a thorough understanding of various embodiments. However, various embodiments may be practiced without the specific details. In other instances, well-known methods, procedures, components, and circuits have not been described in detail so as not to obscure the particular embodiments. Further, various aspects of embodiments may be performed using various means, such as integrated semiconductor circuits ("hardware"), computer-readable instructions organized into one or more programs ("software"), or some combination of hardware and software. For the purposes of this disclosure reference to "logic" shall mean either hardware, software, firmware, or some combination thereof.

Presently, SSDs can be costlier than more traditional storage devices (such as hard disk drives) on a per megabyte basis. To this end, compression may be utilized in an SSD to compress data so that more data fits on the same portion of an SSD, resulting in a lower implementation cost on a per megabyte basis. Additionally, compression can result in significant reduction of write traffic to the NAND. The reduction in write traffic also causes a corresponding reduction in the write amplification, which implies better performance, reliability, wear-leveling, and power consumption.

To this end, some embodiments relate to efficient Solid State Drive (SSD) data compression scheme and layout. Such techniques are not limited to SSDs and may be applied to any type of non-volatile memory as further discussed below. More particularly, an embodiment provides an efficient data layout which takes both the compression data portion (or chunk) size and the indirection granularity into account and provides uniform data layouts for compressed and uncompressed blocks of data. Such techniques may also make recovery from a power loss (such as recovery provided by PLI (Power Loss Imminent) technology, which utilizes energy storing capacitors or batteries to complete in-progress commands and commit temporarily stored data to non-volatile storage) and firmware management easier. Another embodiment provides a novel padding scheme which enables super scalar data decompression, e.g., decreasing read data latencies. Yet another embodiment provides an automatic data by-pass capability for uncompressed data (e.g., organized as groups or chunks of data).

Furthermore, even though some embodiments are generally discussed with reference to Non-Volatile Memory (NVM), embodiments are not limited to a single type of NVM and non-volatile memory of any type or combinations of different NVM types (e.g., in a format such as a Solid State Drive (or SSD, e.g., including NAND and/or NOR type of memory cells) or other formats usable for storage such as a memory drive, flash drive, etc.) may be used. The storage media (whether used in SSD format or otherwise) can be any type of storage media including, for example, one or more of: nanowire memory, Ferro-electric Transistor Random Access Memory (FeTRAM), Magnetoresistive Random Access Memory (MRAM), flash memory, Spin Torque Transfer Random Access Memory (STTRAM), Resistive Random Access Memory, byte addressable 3-Dimensional Cross Point Memory, PCM (Phase Change Memory), etc. Also, any type of Random Access Memory (RAM) such as Dynamic RAM (DRAM), backed by a power reserve (such as a battery or capacitance) to retain the data, may be used. Hence, even volatile memory capable of retaining data during power failure or power disruption may be used for storage in various embodiments.

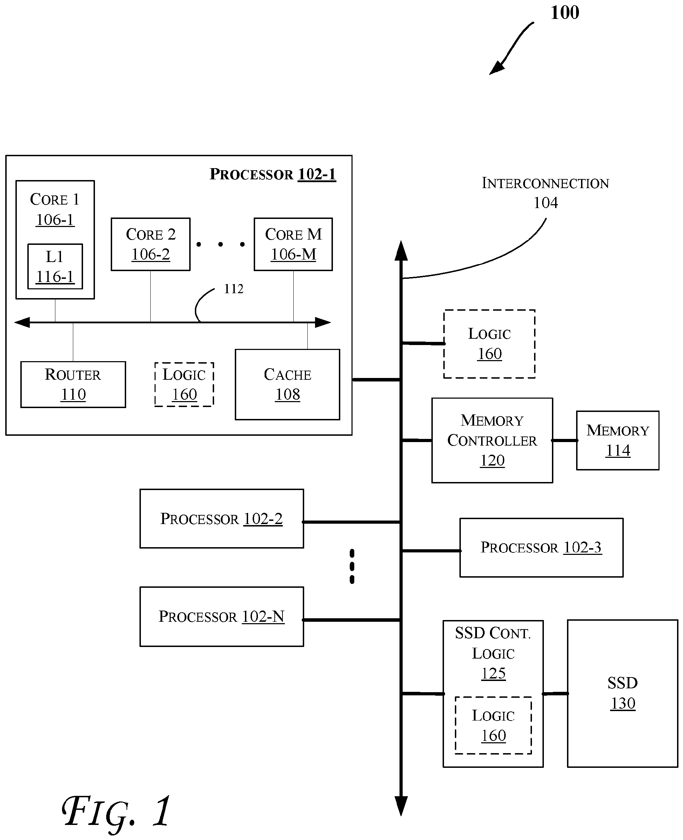

The techniques discussed herein may be provided in various computing systems (e.g., including a non-mobile computing device such as a desktop, workstation, server, rack system, etc. and a mobile computing device such as a smartphone, tablet, UMPC (Ultra-Mobile Personal Computer), laptop computer, Ultrabook™ computing device, smart watch, smart glasses, smart bracelet, etc.), including those discussed with reference to Figs. 1-6. More particularly, Fig. 1 illustrates a block diagram of a computing system 100, according to an embodiment. The system 100 may include one or more processors 102-1 through 102-N (generally referred to herein as "processors 102" or "processor 102"). The processors 102 may communicate via an interconnection or bus 104. Each processor may include various components some of which are only discussed with reference to processor 102-1 for clarity. Accordingly, each of the remaining processors 102-2 through 102-N may include the same or similar components discussed with reference to the processor 102-1.

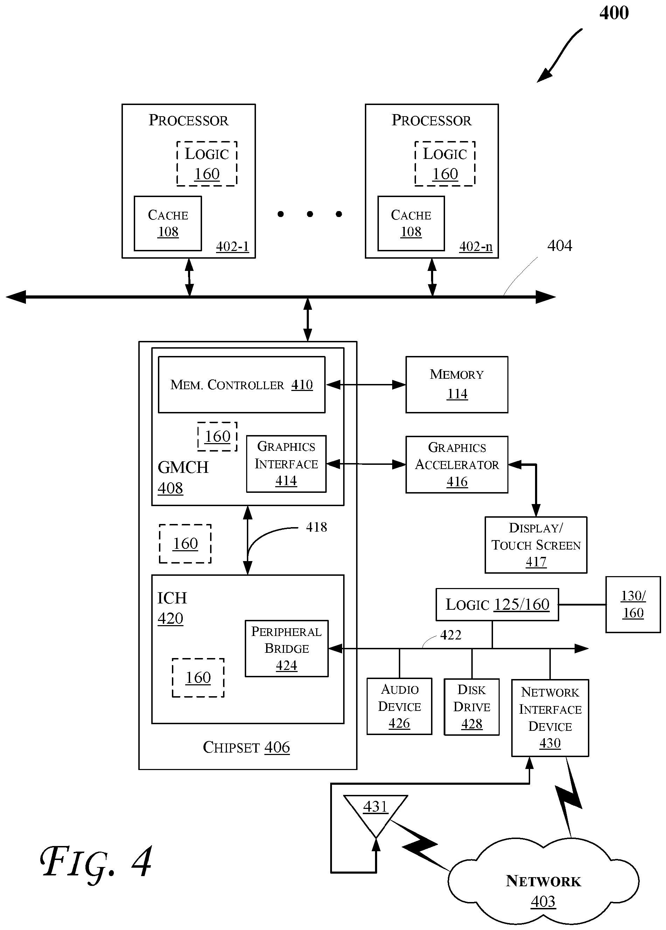

In an embodiment, the processor 102-1 may include one or more processor cores 106-1 through 106-M (referred to herein as "cores 106," or more generally as "core 106"), a processor cache 108 (which may be a shared cache or a private cache in various embodiments), and/or a router 110. The processor cores 106 may be implemented on a single integrated circuit (IC) chip. Moreover, the chip may include one or more shared and/or private caches (such as processor cache 108), buses or interconnections (such as a bus or interconnection 112), logic 120, memory controllers (such as those discussed with reference to Figs. 4-6), or other components.

In one embodiment, the router 110 may be used to communicate between various components of the processor 102-1 and/or system 100. Moreover, the processor 102-1 may include more than one router 110. Furthermore, the multitude of routers 110 may be in communication to enable data routing between various components inside or outside of the processor 102-1.

The processor cache 108 may store data (e.g., including instructions) that are utilized by one or more components of the processor 102-1, such as the cores 106. For example, the processor cache 108 may locally cache data stored in a memory 114 for faster access by the components of the processor 102. As shown in Fig. 1, the memory 114 may be in communication with the processors 102 via the interconnection 104. In an embodiment, the processor cache 108 (that may be shared) may have various levels, for example, the processor cache 108 may be a mid-level cache and/or a last-level cache (LLC). Also, each of the cores 106 may include a level 1 (LI) processor cache (116-1) (generally referred to herein as "LI processor cache 116"). Various components of the processor 102-1 may communicate with the processor cache 108 directly, through a bus (e.g., the bus 112), and/or a memory controller or hub.

As shown in Fig. 1, memory 114 may be coupled to other components of system 100 through a memory controller 120. Memory 114 includes volatile memory and may be interchangeably referred to as main memory. Even though the memory controller 120 is shown to be coupled between the interconnection 104 and the memory 114, the memory controller 120 may be located elsewhere in system 100. For example, memory controller 120 or portions of it may be provided within one of the processors 102 in some embodiments.

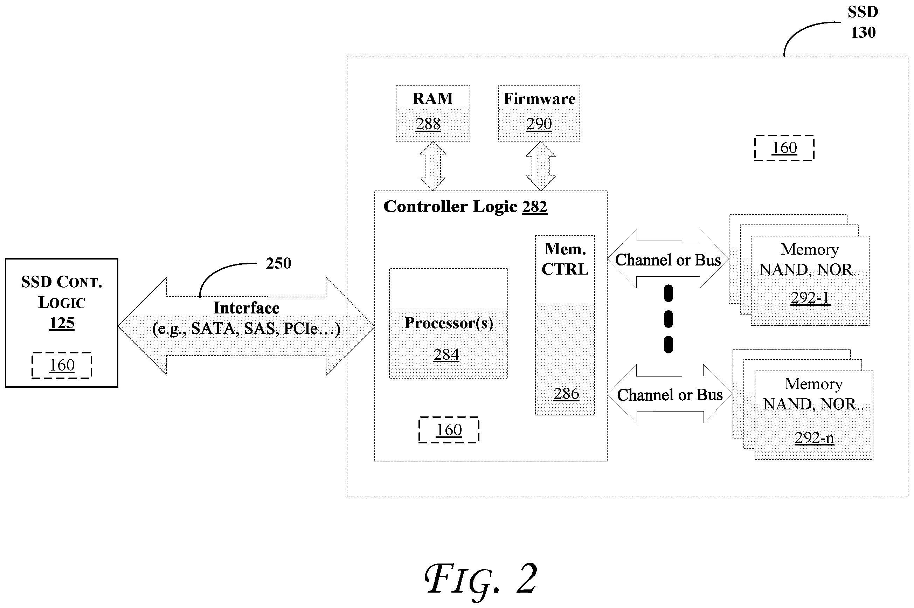

System 100 also includes Non-Volatile (NV) storage (or Non-Volatile Memory (NVM)) device such as an SSD 130 coupled to the interconnect 104 via SSD controller logic 125. Hence, logic 125 may control access by various components of system 100 to the SSD 130. Furthermore, even though logic 125 is shown to be directly coupled to the interconnection 104 in Fig. 1, logic 125 can alternatively communicate via a storage bus/interconnect (such as the SATA (Serial Advanced Technology Attachment) bus, Peripheral Component Interconnect (PCI) (or PCI express (PCIe) interface), etc.) with one or more other components of system 100 (for example where the storage bus is coupled to interconnect 104 via some other logic like a bus bridge, chipset (such as discussed with reference to Figs. 2 and 4-6), etc.). Additionally, logic 125 may be incorporated into memory controller logic (such as those discussed with reference to Figs. 4-6) or provided on a same Integrated Circuit (IC) device in various embodiments (e.g., on the same IC device as the SSD 130 or in the same enclosure as the SSD 130). System 100 may also include other types of non-volatile storage such as those discussed with reference to Figs. 4-6, including for example a hard drive, etc.

Furthermore, logic 125 and/or SSD 130 may be coupled to one or more sensors (not shown) to receive information (e.g., in the form of one or more bits or signals) to indicate the status of or values detected by the one or more sensors. These sensor(s) may be provided proximate to components of system 100 (or other computing systems discussed herein such as those discussed with reference to other figures including 4-6, for example), including the cores 106, interconnections 104 or 112, components outside of the processor 102, SSD 130, SSD bus, SATA bus, logic 125, etc., to sense variations in various factors affecting power/thermal behavior of the system/platform, such as temperature, operating frequency, operating voltage, power consumption, and/or inter-core communication activity, etc.

As illustrated in Fig. 1, system 100 may include logic 160, which can be located in various locations in system 100 (such as those locations shown, including coupled to interconnect 104, inside processor 102, etc.). As discussed herein, logic 160 facilitates operation(s) related to some embodiments such as efficient non-volatile memory (e.g., SSD) data compression scheme and/or layout.

Fig. 2 illustrates a block diagram of various components of an SSD, according to an embodiment. Logic 160 may be located in various locations in system 100 of Fig. 1 as discussed, as well as inside SSD controller logic 125. While SSD controller logic 125 may facilitate communication between the SSD 130 and other system components via an interface 250 (e.g., SATA, SAS, PCIe, etc.), a controller logic 282 facilitates communication between logic 125 and components inside the SSD 130 (or communication between components inside the SSD 130). As shown in Fig. 2, controller logic 282 includes one or more processor cores or processors 284 and memory controller logic 286, and is coupled to Random Access Memory (RAM) 288, firmware storage 290, and one or more memory modules or dies 292-1 to 292-n (which may include NAND flash, NOR flash, or other types of non-volatile memory). Memory modules 292-1 to 292-n are coupled to the memory controller logic 286 via one or more memory channels or busses. One or more of the operations discussed with reference to Figs. 1-6 may be performed by one or more of the components of Fig. 2, e.g., processors 284 and/or controller 282 may compress/decompress (or otherwise cause compression/decompression) of data written to or read from memory modules 292-1 to 292-n. Also, one or more of the operations of Figs. 1-6 may be programmed into the firmware 290. Furthermore, in some embodiments, a hybrid drive may be used instead of the SSD 130 (where a plurality of memory modules/media 292-1 to 292-n is present such as a hard disk drive, flash memory, or other types of non-volatile memory discussed herein). In embodiments using a hybrid drive, logic 160 may be present in the same enclosure as the hybrid drive.

As mentioned above, some embodiments allow for both compressed and uncompressed data (e.g., or groups/chunks of data) to be written with a uniform format. Use of a uniform format may reduce firmware complexity. In an embodiment, a compression token (which could be one or more bits) indicates whether a block has been compressed (or not). The compression token may be positioned in one or more bits which are usually used to convey the Logical Block Addressing/Address (LBA) information (which generally specifies the location or (e.g., linear) address of blocks of data stored on a storage device) in an uncompressed sector. As will be further discussed below, inclusion of the LBA and the compressed block size, in the compression meta data, may permit context replay and may allow for logic to automatically skip decompression on those blocks which were not compressed in the first place. For maximum compaction, one embodiment packs (e.g., all) variants of native 4KB (4096B, 4104B, and 4112B) sector sizes in a 512B sector.

Lossless Data Compression provides for no data loss upon compression and compressed data can be retrieved exactly by decompression process. Lossless data compression can provide several indirect benefits in SSDs such as a larger spare area (which can directly translate to faster performance), increased (e.g., NAND) bandwidth because less data is written, increased ECC (Error Correction Code) protection because the space needed for longer parity bits is practically free if compression happened, and so forth.

As an illustrative example of an embodiment of this scheme, 4KsB sector sizes can be used. KsB is defined as either 4096B, 4104B, or 4112B of data. In this scheme the entire data payload from the host is compressed which includes 4096B/4104B/4112B of host data. For incorporating compression in the SSD, a "compression block or cblock " is defined which can be a 4KsB block of data or more. Each cblock is compressed individually/separately and each cblock is treated independently from the previous and next cblocks.

Generally, SSDs employ logical to physical mapping tables which are also called indirection tables or Flash Translation Tables (FTLs). Each indirection system has a minimum tracking granularity (usually 512B but can be more or less) with which the data from the host is tracked inside the SSD. Due to indirection tracking complexities, it is also important to define an indirection tracking granularity (such as nearest 512B, 1KB, or other sizes). A compressed block is padded to the nearest indirection granularity boundary for ease of tracking in the indirection system.

One of the main drawbacks of data compression is the added decompression latency associated with data reads. Generally, a compressed block can only be decompressed by a single decompression engine and one is limited to the maximum bandwidth of that decompression engine. By incorporating various offsets (as described below),
super-scalar decompression is provided, which allows more than one decompression engine to decompress a block of data. This could enhance decompression performance and help with read data latencies. One embodiment provides the following intelligent nearest 512B padding scheme for use in super scalar data decompression:
(a) For N bytes to be padded out, rather than N 0's followed by the 2-byte length, an embodiment utilizes an intelligent padding scheme that can improve decompress speed/latency.
(b) For N>2, a 2-byte offset field can be stored, followed by anon-zero byte that indicates there are some offsets (e.g., the number of offsets being stored). In the case of single offset, what is stored may be the offset of a byte in the compressed stream which corresponds to about 50% of the input uncompressed data. The compressor logic (e.g., logic 160) may preserve/save the output byte count (offset) when it has consumed the input byte that is (e.g., halfway) in the input data buffer. In general, this will not be 50% of the compressed stream, since the size of the compressed stream is highly dependent on where matching strings are found (and their length), and where literal bytes are encoded. The offset value that is saved should be the first valid symbol that can be decompressed to generate data at about the 50% point of the original uncompressed data. During decompression, if an offset is detected, a second parallel decompressor logic will operate to effectively double the performance. As an extension, an offset of the input byte may be stored (to which the symbol corresponds) so that the decompressed data can be directly written from the parallel unit in its right place. The above embodiment may be extended to more parallel decompressor logic, e.g., four parallel decompressors (storing four offsets in the compressed stream) and so on.

Moreover, in some embodiments, if N<3 then super scalar decompression may not be performed and the legacy approach of zero padding only may be instead applied. In that case, the last byte of the "super scalar decompression meta" called as "Offset Present/Type" below would indicate that there is no super scalar decompression may occur. When N<3, the remaining space beyond the "super scalar decompression meta" may be zero padded. For N>3, it may indicate how many indexes are available.

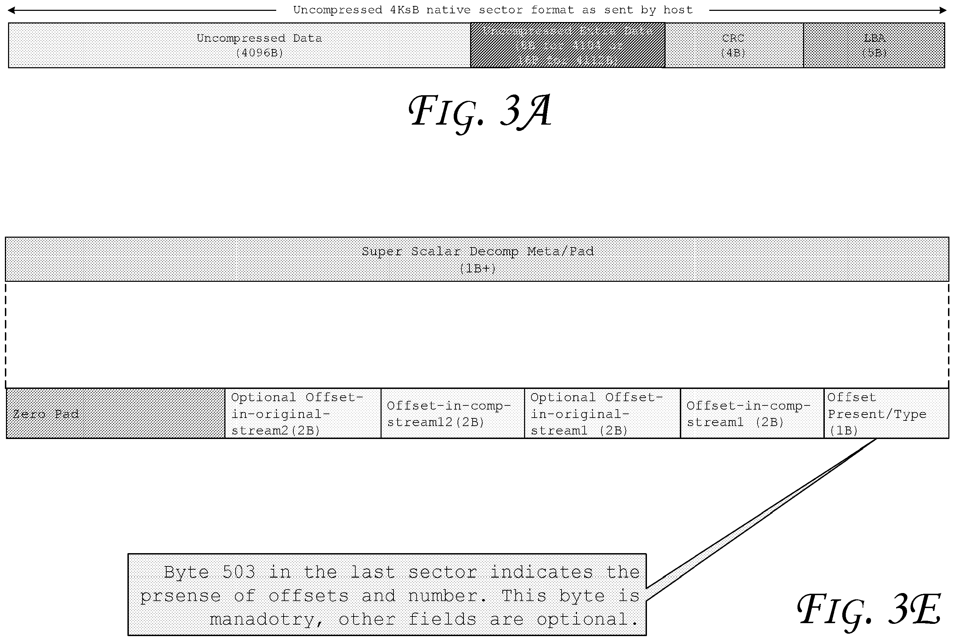

Fig. 3A illustrates a block diagram of uncompressed 4KsB data sector, according to an embodiment. The data sector may be provided by a host for example. More specifically, Fig. 3A shows the uncompressed and compressed data layouts on SSD media (e.g., on NAND media) where the *cblock* size is 4KB and the indirection tracking granularity is 512B. Compressed data is represented in the form of chunks/blocks of 512B. Other chunk/block sizes and indirection tracking granularities are also possible. The data sector of Fig. 3A also includes CRC (Cyclical Redundancy Check) and LBA portions as shown.

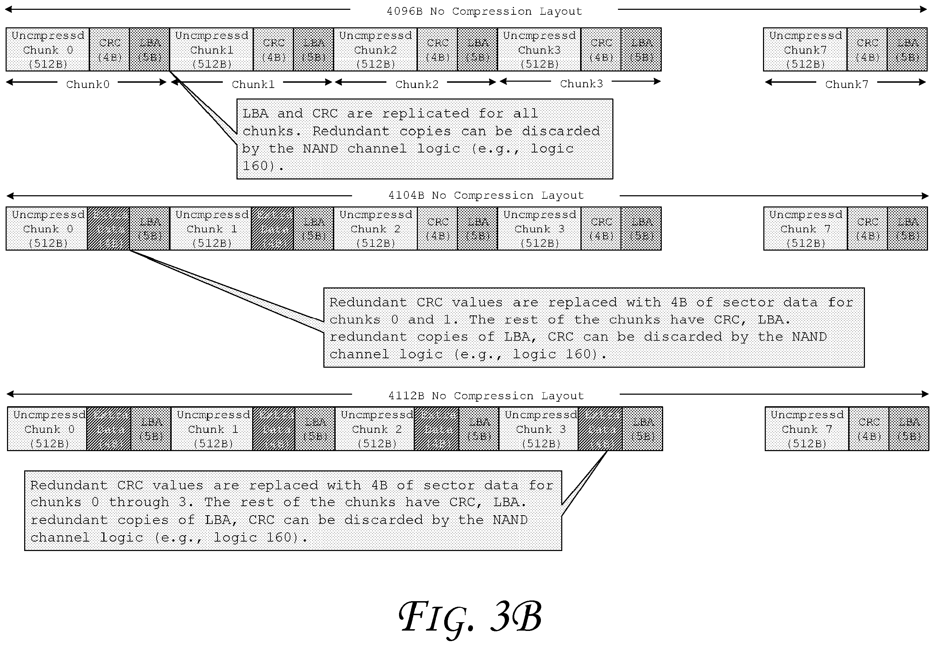

Fig. 3B illustrates a block diagram of incompressible or uncompressed data written on non-volatile (e.g., NAND) media, according to an embodiment. A 4KsB *cblock* can be compressed down to a 502B at a minimum and the least acceptable compressed size would be 6*512+502B or 3574B or 7 sectors. If the data is not compressible to at least 7 sectors, it is written in its uncompressed form using all 8 sectors as shown in Fig. 3B.

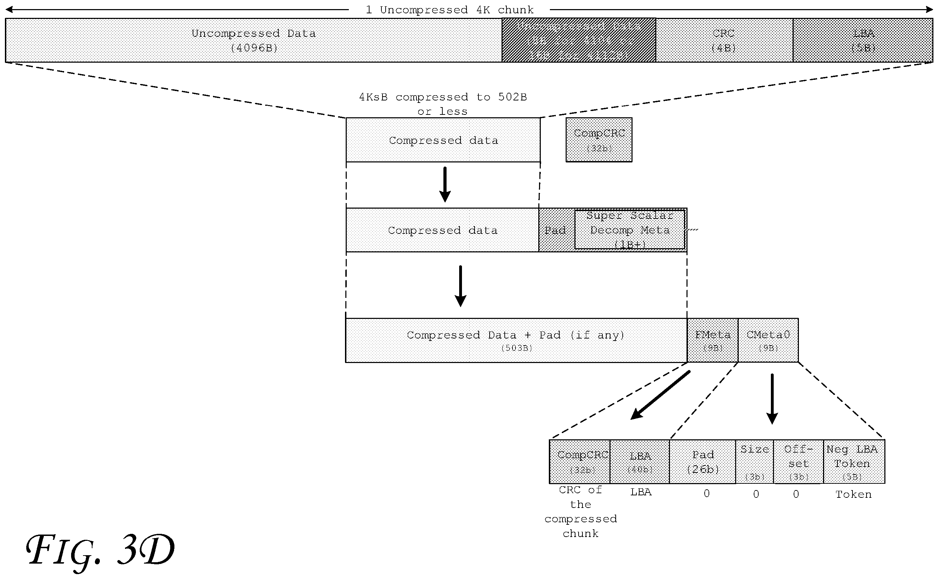

Fig. 3C illustrates a block diagram of non-volatile memory (e.g., NAND) media layout for a 4KsB sector compressed to three, 512B sectors and meta data, according to an embodiment. Fig. 3D illustrates a block diagram of non-volatile memory (e.g., NAND) media layout for a 4KsB compressed to one, 512B sector plus 18B meta data, according to an embodiment.

Referring to Figs. 3C and 3D, compressed data is broken up into data chunks/portions of 512B in length except the last chunk. 9B are used for 5Bytes of LBA information and 4Bytes of compressed CRC. Each chunk/portion is accompanied by a 9B common meta. Fig. 3C shows an example where a 4KsB piece was compressed to three chunks. Fig. 3D shows an example where a 4KsB piece was compressed to one chunk or 502B or less. In one embodiment, if a 4KsB chunk/portion is compressed to one sector, then there will be only a single compression meta-data attached. In an embodiment, if the compressed data is more than one sector, then each sector has the compression meta attached to it.

There are two forms of the compression meta: (1) Common Meta: Common to all compressed data chunks/portions; and (2) Final Meta: For the case where the data is compressed to a single sector or the last chunk/portion in the compressed block. Sample fields within these two meta types are given below:
(1) Common Meta or CMeta:
   (i) Compression Token: Indicates that this chunk is compressed. Absence of this compression token indicates an uncompressed block in an embodiment. This is the same location as the LBA in uncompressed form. The Compression Token is a negative LBA value (starts with 0xF) to distinguish it from host issued LBAs which are positive values.
   (ii) Sector Offset: The offset from the start of the compressed block, e.g., the third compressed chunk has a sector offset of 2.
   (iii) Size field: This field indicates the total size of the compressed block in sectors in a zero based counting scheme. For example, if a block is compressed to 3 sectors, this value will be 2. When Size and Sector Offset are the same, some extra information is available beyond 502B of compressed data for super scalar meta.
   (iv) Alignment Pad (26b) for alignment.
(2) Final Meta or FMeta:
   LBA: 5B of original LBA of the 4KsB block;
   CCRC: 4B of CRC computed over the compressed data.

In one embodiment, for maximum compaction, the 512B packing scheme as shown in Fig. 3B may be used. Other variations of the meta-data packing schemes are possible. For example, the metadata could be moved to the front of the compressed chunk in some embodiments, without loss of generality. Or, the indirection tracking granularity could be set to 520B or 528B. The values shown in the figures are to be used as mere examples of what is possible and should in no way limit the scope of the embodiments.

In one embodiment, logic 160 is an integrated compression engine in the SSD controller (such as shown in Fig. 2). The compression engine may be agnostic of the actual compression mechanism. The compression engine can employ, lossless compression algorithm(s) (such as LZ family (Lempel-Ziv), e.g., including Snappy, LZ4, LZ77, etc.). Moreover, in some embodiments, Fig. 3B shows the uncompressed data in various sizes 4096/4104/4112. From this uncompressed format one can go to the compressed format in Figs. 3C and 3D, depending upon how much compression happened. Fig. 3C shows the case when the uncompressed 4KsB block was compressed down to three sectors and the corresponding layout format and Fig. 3D shows the case when the data compressed down to one sector and corresponding layout format. There could be other cases when 4KsB compressed down to 2, 4, 5, 6, and 7 sectors but those are not shown, while the general approach described with reference to Figs. 3D and 3C remains the same.

Fig. 3E shows a block diagram of a super scalar decompression meta/pad format/layout, according to an embodiment. As shown, the pad can include the following fields in order:
0* (shown as Zero Pad)
2-byte offset-in-comp-streamk|| <Optional 2-byte offset-in-original-streaml> ...
2-byte offset-in-comp-stream2|| <Optional 2-byte offset-in-original-stream2>
2-byte offset-in-comp-stream1|| <Optional 2-byte offset-in-original-streamk>
1-byte Offset Present/Type (shown as Offset Present/Type (1B))

Moreover, in some embodiments, depending upon how much space is available for pad, the zero pad may be used if Z<3, or if it is greater than 3 then one or more offsets may be used for super scalar decompression. Fig. 3E shows that at least 5B were available for the super scalar decompression and at least 2 decompression engines working in parallel may be accommodated. As discussed herein, updating the labels from Z<2 to Z<3 is to indicate counting of the Offset Present/Type in this pad. Another assumption is that at least 2 byte for the offset may be needed.

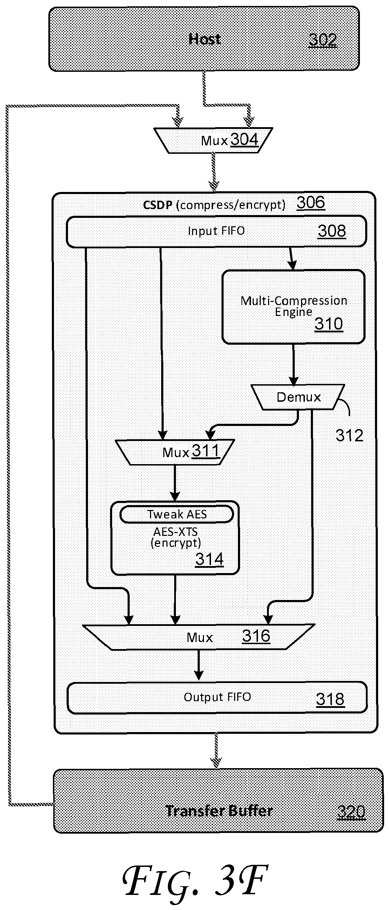

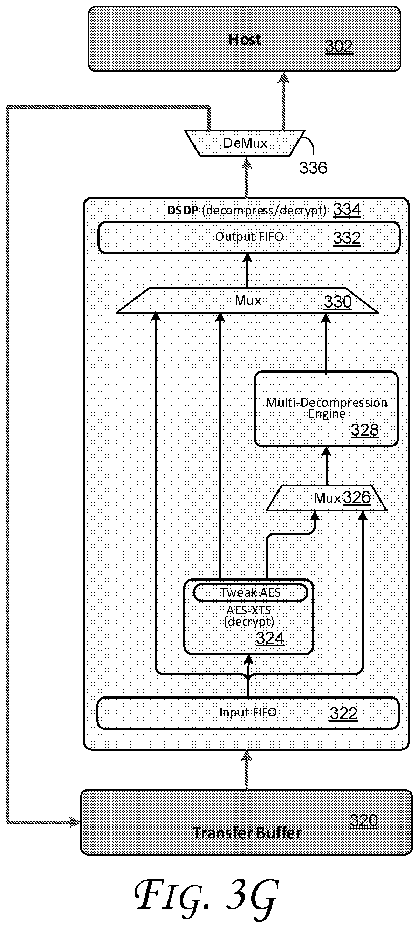

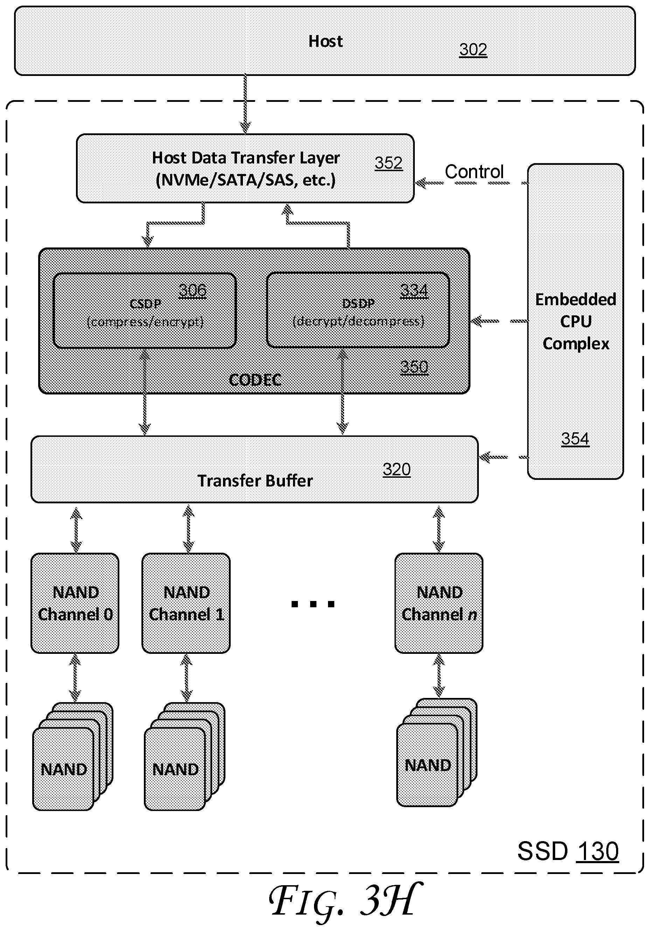

Figs. 3F, 3G, and 3H illustrate block diagrams of SSD components to provide data compression and decompression, according to some embodiments. More particularly, Fig. 3F shows CSDP (Compression Security Data Path) block, performing compression/encryption for data transmitted from host 302 to transfer buffer 320. Fig. 3G shows DSDP (Decompression Security Data Path) block, performing decompression/decryption for data transmitted from buffer 320 to host 302. Fig. 3H shows components of an SSD architecture for inline compression/decompression. While some figures may generally discuss NAND media, embodiments are not limited to NAND media and other types of media (such as those discussed with reference to Fig. 2) may be utilized.

Referring to Fig. 3F, write data is sent by host 302 through a multiplexer 304 to CSDP logic 306. CSDP logic 306 includes an input FIFO (First In, First Out) buffer 308, a multi-compression engine logic 310, multiplexers 311 and 316, a demultiplexer 312, an encryption logic 314 (which may be encrypt data in accordance with Advanced Encryption Standard (AES), established by the US National Institute of Standards and Technology in 2001 and/or Institute of Electrical and Electronics Engineers (IEEE) standardization project for encryption of stored data 1619 for Encrypted Shared Storage Media using the XTS-Advanced Encryption Standard (XEX-based Tweaked Codebook mode (TCB) with ciphertext stealing (CTS) named XTC (XEX TCB CTS)), and an output FIFO 318. Once data written by the host 302 is processed by the components of CSDP 306, the resulting data is stored in the output FIFO 318 before it is transmitted to transfer buffer 320 (e.g., for writing to the SSD media such as discussed with reference to Fig. 2). In some embodiments, CSDP logic may be provided within various components of SSD 130, such as logic 160, logic 282, memory controller 286, etc.

Referring to Fig. 3G, read data (originating from SSD media) is stored in the transfer buffer 320 and forwarded to DSDP logic 334. DSDP logic 334 includes an input FIFO buffer 322, a multi-decompression engine logic 328, multiplexers 326 and 330, a decryption logic 324 (which may be decrypt data in accordance with AES, AES-XTS, etc., and an output FIFO buffer 332. Once read data is processed by the components of DSDP 334, the resulting data is stored in the output FIFO 332 before it is transmitted to the host 302 via demultiplexer 336. In some embodiments, DSDP logic may be provided within various components of SSD 130, such as logic 160, logic 282, memory controller 286, etc. Also, some components of Fig. 3F and 3G may be combined or shared between compression/encryption and decompression/decryption logic, such as buffers 308, 318, 322, and 332.

Referring to Fig. 3H, various components of Figs. 3F and 3G are combined or shared in an SSD 130. Host 302 communicates with CODEC (Compression/Decompression) logic 350 (e.g., including CSDP 306 and DSDP 334) via host data transfer layer logic 352 (e.g., using NVMe (or NVM express, e.g., in accordance with NVM Host Controller Interface Specification, revision 1.2, November 3, 2014), SATA (Serial Advanced Technology Attachment), SAS (Serial-Attached SCSI (Small Computer System Interface)), etc.). An embedded CPU complex 354 (which may be implemented with any of the processors discussed herein, e.g., with reference to Figs. 1-2 and/or 4-6) may control operations of the logic 350/352 and/or transfer buffer 320. The transfer buffer 320 then communicates the read/write data to the actual media (e.g., NAND media and via one or more NAND channels). Even though some embodiments are discussed with reference to NAND media, embodiments are not limited to NAND media and other types of NVM may be used, such as discussed herein.

Several benefits of some embodiments may be as follows:
(a) Layout for Compressed and Uncompressed Data is Uniform. Uniform data layouts for compressed and uncompressed may allow for simpler firmware implementation. Compression can be turned off in some SKUs (Stock Keeping Units) and the same firmware can handle the uncompressed data easily;
(b) Super Scalar Data Decompression: By using the intelligent padding scheme explained above, it is possible to enable multiple decompression engines to work simultaneously on the compressed block, for lower read data latencies;
(c) Context Replay: The firmware (e.g., logic 160) may have the ability to read the compression meta-data and find out the LBA and how big each compressed chunk is for context replay purposes. This embedded LBA provides the information for context replay in case the context journal was not yet written when the drive shut down or in cases when there is an ECC fatal in the context journal of any band. The firmware reads each page and extracts the LBA and size information and updates its logical to physical table. This mechanism also enables rebuilding of the entire context from scratch should the need to do so arises; and/or
(d) Automatic Data By-Pass: During compression operation it is possible that compressed and uncompressed chunks are contiguously written to the media. Whether a chunk is compressed or uncompressed is indicated through the compression token/indicia (e.g., the absence of the compression token indicating that the data is written uncompressed). The decompression engine has the capability to automatically detect uncompressed chunks and move them contiguously with the previously uncompressed data. This is referred to as automatic data by-pass mode. This allows for efficient data decompression on reads because uncompressed chunks are automatically sent to the host without any decompression. Since this can be automated in hardware, firmware (e.g., logic 160) intervention is minimized; hence, decreasing the latency of the system.

Moreover, compression, as a standalone feature, generally just reduces the data size of the data being written to the SSD and hence lowers the cost of the SSD through lowered $/GB. It also provides other indirect benefits: (1) endurance of the SSD devices is improved because by writing less data, more data can be written over the lifetime of the device; it is to be noted that each SSD device can operate for a prescribed number of program/erase cycles reliably; (2) extra spare area is created which can be used in an SSD as the "shuffle-space" for improving the writes IOPS of the device; (3) power consumption is reduced because of the lower device I/O power utilization; and/or (4) write speed of the SSD is improved because less data has to be written to the devices and bus bandwidth is improved.

Fig. 4 illustrates a block diagram of a computing system 400 in accordance with an embodiment. The computing system 400 may include one or more central processing unit(s) (CPUs) 402 or processors that communicate via an interconnection network (or bus) 404. The processors 402 may include a general purpose processor, a network processor (that processes data communicated over a computer network 403), an application processor (such as those used in cell phones, smart phones, etc.), or other types of a processor (including a reduced instruction set computer (RISC) processor or a complex instruction set computer (CISC)). Various types of computer networks 403 may be utilized including wired (e.g., Ethernet, Gigabit, Fiber, etc.) or wireless networks (such as cellular, 3G (Third-Generation Cell-Phone Technology or 3rd Generation Wireless Format (UWCC)), 4G, Low Power Embedded (LPE), etc.). Moreover, the processors 402 may have a single or multiple core design. The processors 402 with a multiple core design may integrate different types of processor cores on the same integrated circuit (IC) die. Also, the processors 402 with a multiple core design may be implemented as symmetrical or asymmetrical multiprocessors.

In an embodiment, one or more of the processors 402 may be the same or similar to the processors 102 of Fig. 1. For example, one or more of the processors 402 may include one or more of the cores 106 and/or processor cache 108. Also, the operations discussed with reference to Figs. 1-3F may be performed by one or more components of the system 400.

A chipset 406 may also communicate with the interconnection network 404. The chipset 406 may include a graphics and memory control hub (GMCH) 408. The GMCH 408 may include a memory controller 410 (which may be the same or similar to the memory controller 120 of Fig. 1 in an embodiment) that communicates with the memory 114. The memory 114 may store data, including sequences of instructions that are executed by the CPU 402, or any other device included in the computing system 400. Also, system 400 includes logic 125, SSD 130, and/or logic 160 (which may be coupled to system 400 via bus 422 as illustrated, via other interconnects such as 404, where logic 125 is incorporated into chipset 406, etc. in various embodiments). In one embodiment, the memory 114 may include one or more volatile storage (or memory) devices such as random access memory (RAM), dynamic RAM (DRAM), synchronous DRAM (SDRAM), static RAM (SRAM), or other types of storage devices. Nonvolatile memory may also be utilized such as a hard disk drive, flash, etc., including any NVM discussed herein. Additional devices may communicate via the interconnection network 404, such as multiple CPUs and/or multiple system memories.

The GMCH 408 may also include a graphics interface 414 that communicates with a graphics accelerator 416. In one embodiment, the graphics interface 414 may communicate with the graphics accelerator 416 via an accelerated graphics port (AGP) or Peripheral Component Interconnect (PCI) (or PCI express (PCIe) interface). In an embodiment, a display 417 (such as a flat panel display, touch screen, etc.) may communicate with the graphics interface 414 through, for example, a signal converter that translates a digital representation of an image stored in a storage device such as video memory or system memory into display signals that are interpreted and displayed by the display. The display signals produced by the display device may pass through various control devices before being interpreted by and subsequently displayed on the display 417.

A hub interface 418 may allow the GMCH 408 and an input/output control hub (ICH) 420 to communicate. The ICH 420 may provide an interface to I/O devices that communicate with the computing system 400. The ICH 420 may communicate with a bus 422 through a peripheral bridge (or controller) 424, such as a peripheral component interconnect (PCI) bridge, a universal serial bus (USB) controller, or other types of peripheral bridges or controllers. The bridge 424 may provide a data path between the CPU 402 and peripheral devices. Other types of topologies may be utilized. Also, multiple buses may communicate with the ICH 420, e.g., through multiple bridges or controllers. Moreover, other peripherals in communication with the ICH 420 may include, in various embodiments, integrated drive electronics (IDE) or small computer system interface (SCSI) hard drive(s), USB port(s), a keyboard, a mouse, parallel port(s), serial port(s), floppy disk drive(s), digital output support (e.g., digital video interface (DVI)), or other devices.

The bus 422 may communicate with an audio device 426, one or more disk drive(s) 428, and a network interface device 430 (which is in communication with the computer network 403, e.g., via a wired or wireless interface). As shown, the network interface device 430 may be coupled to an antenna 431 to wirelessly (e.g., via an Institute of Electrical and Electronics Engineers (IEEE) 802.11 interface (including IEEE 802.11a/b/g/n/ac, etc.), cellular interface, 3G, 4G, LPE, etc.) communicate with the network 403. Other devices may communicate via the bus 422. Also, various components (such as the network interface device 430) may communicate with the GMCH 408 in some embodiments. In addition, the processor 402 and the GMCH 408 may be combined to form a single chip. Furthermore, the graphics accelerator 416 may be included within the GMCH 408 in other embodiments.

Furthermore, the computing system 400 may include volatile and/or nonvolatile memory (or storage). For example, nonvolatile memory may include one or more of the following: read-only memory (ROM), programmable ROM (PROM), erasable PROM (EPROM), electrically EPROM (EEPROM), a disk drive (e.g., 428), a floppy disk, a compact disk ROM (CD-ROM), a digital versatile disk (DVD), flash memory, a magneto-optical disk, or other types of nonvolatile machine-readable media that are capable of storing electronic data (e.g., including instructions).

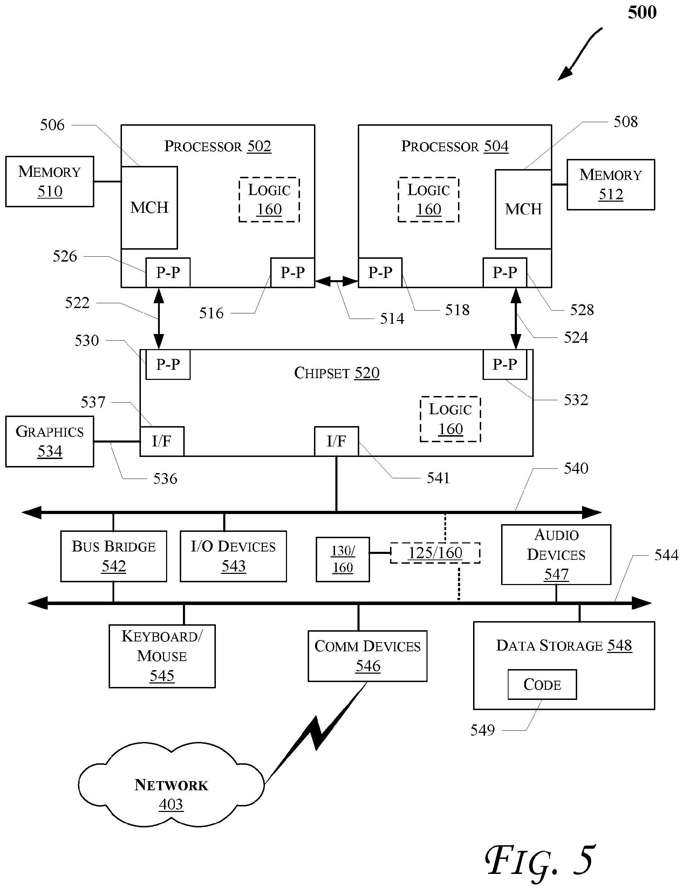

Fig. 5 illustrates a computing system 500 that is arranged in a point-to-point (PtP) configuration, according to an embodiment. In particular, Fig. 5 shows a system where processors, memory, and input/output devices are interconnected by a number of point-to-point interfaces. The operations discussed with reference to Figs. 1-4 may be performed by one or more components of the system 500.

As illustrated in Fig. 5, the system 500 may include several processors, of which only two, processors 502 and 504 are shown for clarity. The processors 502 and 504 may each include a local memory controller hub (MCH) 506 and 508 to enable communication with memories 510 and 512. The memories 510 and/or 512 may store various data such as those discussed with reference to the memory 114 of Figs. 1 and/or 4. Also, MCH 506 and 508 may include the memory controller 120 in some embodiments. Furthermore, system 500 includes logic 125, SSD 130, and/or logic 160 (which may be coupled to system 500 via bus 540/544 such as illustrated, via other point-to-point connections to the processor(s) 502/504 or chipset 520, where logic 125 is incorporated into chipset 520, etc. in various embodiments).

In an embodiment, the processors 502 and 504 may be one of the processors 402 discussed with reference to Fig. 4. The processors 502 and 504 may exchange data via a point-to-point (PtP) interface 514 using PtP interface circuits 516 and 518, respectively. Also, the processors 502 and 504 may each exchange data with a chipset 520 via individual PtP interfaces 522 and 524 using point-to-point interface circuits 526, 528, 530, and 532. The chipset 520 may further exchange data with a high-performance graphics circuit 534 via a high-performance graphics interface 536, e.g., using a PtP interface circuit 537. As discussed with reference to Fig. 4, the graphics interface 536 may be coupled to a display device (e.g., display 417) in some embodiments.

In one embodiment, one or more of the cores 106 and/or processor cache 108 of Fig. 1 may be located within the processors 502 and 504 (not shown). Other embodiments, however, may exist in other circuits, logic units, or devices within the system 500 of Fig. 5. Furthermore, other embodiments may be distributed throughout several circuits, logic units, or devices illustrated in Fig. 5.

The chipset 520 may communicate with a bus 540 using a PtP interface circuit 541. The bus 540 may have one or more devices that communicate with it, such as a bus bridge 542 and I/O devices 543. Via a bus 544, the bus bridge 542 may communicate with other devices such as a keyboard/mouse 545, communication devices 546 (such as modems, network interface devices, or other communication devices that may communicate with the computer network 403, as discussed with reference to network interface device 430 for example, including via antenna 431), audio I/O device, and/or a data storage device 548. The data storage device 548 may store code 549 that may be executed by the processors 502 and/or 504.

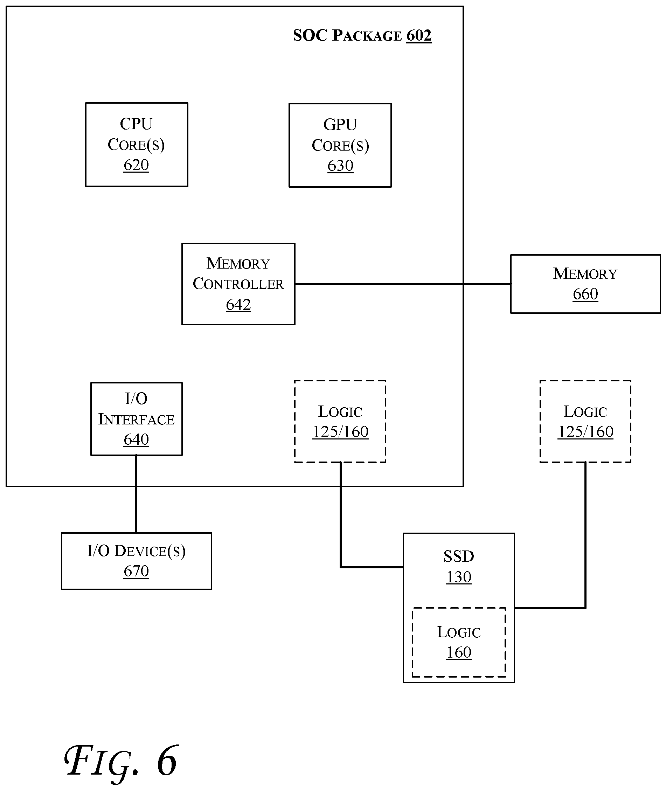

In some embodiments, one or more of the components discussed herein can be embodied as a System On Chip (SOC) device. Fig. 6 illustrates a block diagram of an SOC package in accordance with an embodiment. As illustrated in Fig. 6, SOC 602 includes one or more Central Processing Unit (CPU) cores 620, one or more Graphics Processor Unit (GPU) cores 630, an Input/Output (I/O) interface 640, and a memory controller 642. Various components of the SOC package 602 may be coupled to an interconnect or bus such as discussed herein with reference to the other figures. Also, the SOC package 602 may include more or less components, such as those discussed herein with reference to the other figures. Further, each component of the SOC package 620 may include one or more other components, e.g., as discussed with reference to the other figures herein. In one embodiment, SOC package 602 (and its components) is provided on one or more Integrated Circuit (IC) die, e.g., which are packaged onto a single semiconductor device.

As illustrated in Fig. 6, SOC package 602 is coupled to a memory 660 (which may be similar to or the same as memory discussed herein with reference to the other figures) via the memory controller 642. In an embodiment, the memory 660 (or a portion of it) can be integrated on the SOC package 602.

The I/O interface 640 may be coupled to one or more I/O devices 670, e.g., via an interconnect and/or bus such as discussed herein with reference to other figures. I/O device(s) 670 may include one or more of a keyboard, a mouse, a touchpad, a display, an image/video capture device (such as a camera or camcorder/video recorder), a touch screen, a speaker, or the like. Furthermore, SOC package 602 may include/integrate the logic 125/160 in an embodiment. Alternatively, the logic 125/160 may be provided outside of the SOC package 602 (i.e., as a discrete logic).

The following examples pertain to further embodiments. Example 1 includes an apparatus comprising: logic, coupled to non-volatile memory, to receive data and compress the data to generate compressed data prior to storage of the compressed data in the non-volatile memory, wherein the compressed data is to comprise a compressed version of the data, size of the compressed data, common meta information, and final meta information. Example 2 includes the apparatus of example 1, wherein the common meta information is to comprise one or more of: one or more padding bits, size of the compressed data, an offset, and a compression token. Example 3 includes the apparatus of example 2, wherein the compression token is to comprise one or more bits. Example 4 includes the apparatus of example 2, wherein the compression token is to be stored in a same space as Logical Block Addressing (LBA) information. Example 5 includes the apparatus of example 2, wherein the compression token is to indicate whether a corresponding portion of data is compressed. Example 6 includes the apparatus of example 2, wherein absence of the compression token is to indicate that the corresponding portion of the data is uncompressed. Example 7 includes the apparatus of example 2, wherein decompression of the compressed data is to be performed at least partially based on a value of the compression token or absence of the compression token. Example 8 includes the apparatus of example 1, wherein decompression of the compressed data is to be performed by a plurality of decompression logic. Example 9 includes the apparatus of example 1, wherein the final meta information is to comprise one or more of: a compressed Cyclical Redundancy Code (CRC) and LBA information. Example 10 includes the apparatus of example 1, wherein the logic is to access the common information data or the final meta information to perform context replay or context rebuilding. Example 11 includes the apparatus of example 1, wherein the compressed data and the received data are to have layouts in accordance with uniform formats. Example 12 includes the apparatus of example 1, wherein the logic is to compress the received data in accordance with one or more lossless compression algorithms. Example 13 includes the apparatus of example 1, wherein the compressed data is to be encrypted after compression or decrypted before decompression. Example 14 includes the apparatus of example 13, wherein the compressed data is to be encrypted or decrypted in accordance with Advanced Encryption Standard. Example 15 includes the apparatus of example 1, wherein the one or more padding bits are to pad the compressed data to a nearest indirection granularity boundary. Example 16 includes the apparatus of example 1, wherein a memory controller is to comprise the logic. Example 17 includes the apparatus of example 1, wherein a solid state drive is to comprise the logic. Example 18 includes the apparatus of example 1, wherein the non-volatile memory is to comprise one or more of: nanowire memory, Ferro-electric Transistor Random Access Memory (FeTRAM), Magnetoresistive Random Access Memory (MRAM), flash memory, Spin Torque Transfer Random Access Memory (STTRAM), Resistive Random Access Memory, byte addressable 3-Dimensional Cross Point Memory, PCM (Phase Change Memory), and volatile memory backed by a power reserve to retain data during power failure or power disruption. Example 19 includes the apparatus of example 1, further comprising a network interface to communicate the data with a host.

Example 20 includes a method comprising: receiving data and compressing the data to generate compressed data prior to storage of the compressed data in non-volatile memory, wherein the compressed data comprises a compressed version of the data, size of the compressed data, common meta information, and final meta information. Example 21 includes the method of example 20, wherein the common meta information comprises one or more of: one or more padding bits, size of the compressed data, an offset, and a compression token, and the final meta information comprises one or more of: a compressed Cyclical Redundancy Code (CRC) and LBA information. Example 22 includes the method of example 20, further comprising decompressing the compressed data by a plurality of decompression logic. Example 23 includes the method of example 20, further comprising access the common information data or the final meta information to perform context replay or context rebuilding. Example 24 includes a computer-readable medium comprising one or more instructions that when executed on one or more processors configure the one or more processors to perform one or more operations to: receive data and compressing the data to generate compressed data prior to storage of the compressed data in non-volatile memory, wherein the compressed data comprises a compressed version of the data, size of the compressed data, common meta information, and final meta information. Example 25 includes the computer-readable medium of example 24, further comprising one or more instructions that when executed on the processor configure the processor to perform one or more operations to cause decompressing of the compressed data by a plurality of decompression logic. Example 26 includes the computer-readable medium of example 24, further comprising one or more instructions that when executed on the processor configure the processor to perform one or more operations to cause access to the common information data or the final meta information to perform context replay or context rebuilding.

Example 27 includes a computing system comprising: a host comprising a processor having one or more processor cores; non-volatile memory; and logic, coupled to the non-volatile memory, to receive data from a host and compress the uncompressed data to generate compressed data prior to storage of the compressed data in the non-volatile memory, wherein the compressed data is to comprise a compressed version of the uncompressed data, size of the compressed data, common meta information, and final meta information. Example 28 includes the system of example 27, wherein the common meta information is to comprise one or more of: one or more padding bits, size of the compressed data, an offset, and a compression token. Example 29 includes the system of example 28, wherein the compression token is to comprise one or more bits. Example 30 includes the system of example 28, wherein the compression token is to be stored in a same space as Logical Block Addressing (LBA) information. Example 31 includes the system of example 28, wherein the compression token is to indicate whether a corresponding portion of data is compressed. Example 32 includes the system of example 28, wherein absence of the compression token is to indicate that the corresponding portion of the data is uncompressed. Example 33 includes the system of example 28, wherein decompression of the compressed data is to be performed at least partially based on a value of the compression token or absence of the compression token. Example 34 includes the system of example 27, wherein decompression of the compressed data is to be performed by a plurality of decompression logic.

Example 35 includes an apparatus comprising means to perform a method as set forth in any preceding example.

Example 36 comprises machine-readable storage including machine-readable instructions, when executed, to implement a method or realize an apparatus as set forth in any preceding example.

In various embodiments, the operations discussed herein, e.g., with reference to Figs. 1-6, may be implemented as hardware (e.g., circuitry), software, firmware, microcode, or combinations thereof, which may be provided as a computer program product, e.g., including a tangible (e.g., non-transitory) machine-readable or computer-readable medium having stored thereon instructions (or software procedures) used to program a computer to perform a process discussed herein. Also, the term "logic" may include, by way of example, software, hardware, or combinations of software and hardware. The machine-readable medium may include a storage device such as those discussed with respect to Figs. 1-6.

Additionally, such tangible computer-readable media may be downloaded as a computer program product, wherein the program may be transferred from a remote computer (e.g., a server) to a requesting computer (e.g., a client) by way of data signals (such as in a carrier wave or other propagation medium) via a communication link (e.g., a bus, a modem, or a network connection).

Reference in the specification to "one embodiment" or "an embodiment" means that a particular feature, structure, or characteristic described in connection with the embodiment may be included in at least an implementation. The appearances of the phrase "in one embodiment" in various places in the specification may or may not be all referring to the same embodiment.

Also, in the description and claims, the terms "coupled" and "connected," along with their derivatives, may be used. In some embodiments, "connected" may be used to indicate that two or more elements are in direct physical or electrical contact with each other. "Coupled" may mean that two or more elements are in direct physical or electrical contact. However, "coupled" may also mean that two or more elements may not be in direct contact with each other, but may still cooperate or interact with each other.

Thus, although embodiments have been described in language specific to structural features, numerical values, and/or methodological acts, it is to be understood that claimed subject matter may not be limited to the specific features, numerical values, or acts described. Rather, the specific features, numerical values, and acts are disclosed as sample forms of implementing the claimed subject matter.

## Claims

1. A method comprising:
receiving data and compressing the data to generate compressed data prior to storage of the compressed data in non-volatile memory (130),
wherein the compressed data comprises a compressed version of the data, common meta information, and final meta information,
wherein the compressed version of the data is broken into chunks and each chunk is accompanied by common meta information, and the last chunk is additionally accompanied by the final meta information,
wherein the common meta information comprises one or more padding bits, the size of the compressed data, an offset, and a compression token,
wherein the final meta information comprises a compressed Cyclical Redundancy Code (CRC) and Logical Block Addressing (LBA) information,
wherein the compression token is a negative LBA value, and stored in a same space as the Logical Block Addressing (LBA) information, and
wherein the compression token indicates whether a corresponding portion of data is compressed, wherein absence of the compression token indicates that the corresponding portion of the data is uncompressed, and wherein decompression of the compressed data is performed at least partially based on a value of the compression token or absence of the compression token;
the method further comprising decompressing the compressed data by a plurality of decompression logic, wherein for each detected offset a further decompression logic will operate in parallel, with each offset being the first valid symbol to be decompressed.

2. The method of claim 1, wherein the compressed data and the received data have layouts in accordance with uniform formats.

3. The method of claim 1, further comprising compressing the received data in accordance with one or more lossless compression algorithms, or encrypting the compressed data after compression or decrypting the compressed data before decompression, or encrypting or decrypting the compressed data in accordance with Advanced Encryption Standard.

4. The method of claim 1, wherein the one or more padding bits pad the compressed data to a nearest indirection granularity boundary.

5. The method of claim 1, wherein the non-volatile memory (130) comprises one or more of: nanowire memory, Ferro-electric Transistor Random Access Memory (FeTRAM), Magnetoresistive Random Access Memory (MRAM), flash memory, Spin Torque Transfer Random Access Memory (STTRAM), Resistive Random Access Memory, byte addressable 3-Dimensional Cross Point Memory, PCM (Phase Change Memory), and volatile memory backed by a power reserve to retain data during power failure or power disruption.

6. An apparatus comprising means configured to perform a method as set forth in any preceding claim.

7. Machine-readable storage including machine-readable instructions, which when executed by a processor implement the method as set forth in any of preceding claims 1 to 5.

## Patentansprüche

1. Verfahren, das Folgendes umfasst:
Empfangen von Daten und Komprimieren der Daten zum Erzeugen komprimierter Daten vor einer Speicherung der komprimierten Daten in einem nichtflüchtigen Speicher (130),
wobei die komprimierten Daten eine komprimierte Version der Daten, gemeinsame Metainformationen und abschließende Meta-Informationen umfassen,
wobei die komprimierte Version der Daten in Chunks unterteilt wird und jeder Chunk von gemeinsamen Metainformationen begleitet wird und der letzte Chunk zusätzlich von den abschließenden Metainformationen begleitet wird,
wobei die gemeinsamen Metainformationen ein oder mehrere Füllbits, die Größe der komprimierten Daten, einen Offset und ein Kompressionstoken umfassen,
wobei die abschließenden Metainformationen einen komprimierten zyklischen Redundanzcode (CRC) und Logische-Blockadressierung(LBA)-Informationen umfassen,
wobei das Kompressionstoken ein negativer LBA-Wert ist und in demselben Raum wie die Logische-Blockadressierung(LBA)-Informationen gespeichert ist und
wobei das Kompressionstoken angibt, ob ein entsprechender Abschnitt von Daten komprimiert ist,
wobei ein Fehlen des Kompressionstokens angibt, dass der entsprechende Abschnitt der Daten unkomprimiert ist, und wobei eine Dekompression der komprimierten Daten zumindest teilweise basierend auf einem Wert des Kompressionstokens oder einem Fehlen des Kompressionstokens durchgeführt wird;
wobei das Verfahren ferner Dekomprimieren der komprimierten Daten durch mehrere Dekompressionslogiken umfasst, wobei für jeden detektierten Offset eine weitere Dekompressionslogik parallel arbeitet, wobei jeder Offset das erste gültige zu dekomprimierende Symbol ist.

2. Verfahren nach Anspruch 1, wobei die komprimierten Daten und die empfangenen Daten Layouts gemäß einheitlichen Formaten aufweisen.

3. Verfahren nach Anspruch 1, ferner umfassend Komprimieren der empfangenen Daten gemäß einem oder mehreren verlustfreien Kompressionsalgorithmen oder Verschlüsseln der komprimierten Daten nach einer Kompression oder einem Entschlüsseln der komprimierten Daten vor einer Dekompression oder Verschlüsseln oder Entschlüsseln der komprimierten Daten gemäß Advanced Encryption Standard.

4. Verfahren nach Anspruch 1, wobei das eine oder die mehreren Füllbits die komprimierten Daten bis zu einer nächsten Indirektionsgranularitätsgrenze anfüllen.

5. Verfahren nach Anspruch 1, wobei der nichtflüchtige Speicher (130) eines oder mehrere der Folgenden umfasst: Nanodrahtspeicher, ferroelektrischen Transistordirektzugriffsspeicher (FeTRAM), magnetoresistiven Direktzugriffsspeicher (MRAM), Flash-Speicher, Spin-Torque-Transfer-Direktzugriffsspeicher (STTRAM), resistiven Direktzugriffsspeicher, byteadressierbaren dreidimensionalen Kreuzpunktspeicher, PCM (Phasenänderungsspeicher) und flüchtigen Speicher, gestützt durch eine Energiereserve zum Beibehalten von Daten während eines Stromausfalls oder einer Stromunterbrechung.

6. Einrichtung, die Mittel umfasst, die zum Durchführen eines Verfahrens nach einem der vorhergehenden Ansprüche ausgelegt sind.

7. Maschinenlesbarer Speicher, der maschinenlesbare Anweisungen enthält, die bei Ausführung durch einen Prozessor das Verfahren nach einem der vorhergehenden Ansprüche 1 bis 5 implementieren.

## Revendications

1. Procédé comprenant :
la réception de données et la compression de ces données de façon à générer des données compressées avant de stocker ces données compressées dans une mémoire non volatile (130),
ces données compressées comprenant une version compressée des données, des méta-informations communes, et des méta-informations finales,
la version compressée de ces données étant décomposée en blocs et chaque bloc étant accompagné de méta-informations communes, et le dernier bloc étant accompagné en plus des méta-informations finales,
les méta-informations communes comprenant un ou plusieurs bits de remplissage, la taille des données compressées, un décalage, et un jeton de compression,
les méta-informations finales comprenant des informations de code de redondance cyclique (CRC) compressé et des informations d'adressage par bloc logique (LBA),
le jeton de compression étant une valeur LBA négative et étant stocké dans un même espace que les informations d'adressage par bloc logique (LBA), et
le jeton de compression indiquant si une partie correspondante des données est compressée, l'absence du jeton de compression indiquant que la partie correspondante des données n'est pas compressée, et la décompression des données compressées étant exécutée au moins partiellement en se basant sur une valeur du jeton de compression ou sur l'absence du jeton de compression ;
ce procédé comprenant en outre la décompression des données compressées par une pluralité de logiques de décompression, pour chaque décalage détecté, une autre logique de décompression fonctionnant en parallèle, chaque décalage étant le premier symbole valide à être décompressé.

2. Procédé selon la revendication 1, dans lequel les données compressées et les données reçues ont des dispositions selon des formats uniformes.

3. Procédé selon la revendication 1, comprenant en outre la compression des données reçues selon un ou plusieurs algorithmes de compression sans perte, ou le chiffrement des données compressées après la compression ou le déchiffrement des données compressées avant la décompression, ou le chiffrement ou le déchiffrement des données compressées conformément au standard de chiffrement avancé.

4. Procédé selon la revendication 1, dans lequel le ou les bits de remplissage remplissent les données compressées jusqu'à une limite de granularité d'indirection la plus proche.

5. Procédé selon la revendication 1, dans lequel la mémoire non volatile (130) consiste en une ou plusieurs des mémoires suivantes : mémoire nanofil, mémoire vive à transistor ferroélectrique (FeTRAM), mémoire vive magnéto-résistive (MRAM), mémoire flash, mémoire vive à transfert de couple de spin (STTRAM), mémoire vive résistive, mémoire à points de croisement tridimensionnelle adressable par octet, mémoire à changement de phase (PCM), et mémoire volatile soutenue par une réserve d'énergie afin de conserver les données pendant une panne de courant ou une interruption d'alimentation.

6. Appareil comprenant des moyens configurés de façon à exécuter le procédé selon l'une quelconque des revendications précédentes.

7. Support de stockage lisible par machine comprenant des instructions qui, lorsqu'elles sont exécutées par un processeur, mettent en œuvre le procédé selon l'une quelconque des revendications précédentes 1 à 5.
